Europäisches Patentamt

European Patent Office

Office européen des brevets

(11) Numéro de publication: **0 123 754**
**A1**

## (12) DEMANDE DE BREVET EUROPEEN

(21) Numéro de dépôt: **83400863.3**

(22) Date de dépôt: **29.04.83**

(51) Int. Cl.³: **F 16 J 9/00**

(43) Date de publication de la demande: **07.11.84**
**Bulletin 84/45**

(71) Demandeur: **MAD FRANCE, 23, rue Jean Giraudoux, F-75116 Paris (FR)**

(72) Inventeur: **Promeyrat, Maurice, 2, impasse Ronsart, F-93270 Sevran (Seine Saint-Denis) (FR)**

(84) Etats contractants désignés: **AT BE CH DE GB IT LI LU NL SE**

(74) Mandataire: **Bloch, Gérard et al, 39, avenue de Friedland, F-75008 Paris (FR)**

(54) **Piston pour machines alternatives.**

(57) L'invention concerne un piston avec un porte-segments (13). Dans au moins l'une des gorges (17) du porte-segments (14) sont disposés le segment considéré (12) et un plat annulaire vertical (1) de section droite rectangulaire et de hauteur différente de celle du segment.

En fonctionnement, le plat (1) se déplace de façon alternative et il est créé de chaque côté du plat (1), un coussin d'huile relativement rigide.

L'invention est bien appropriée pour les moteurs Diesel et permet notamment une bonne compression, une bonne étanchéité et une économie de carburant.

0123754

## Piston pour machines alternatives.

La présente invention concerne un piston pour machines alternatives, en particulier pour compresseurs et moteurs à allumage commandé ou à allumage par compression.

On sait que les segments d'étanchéité d'un piston, par exemple le segment dit coup de feu et le segment d'étanchéité proprement dit, le premier étant disposé en haut du piston, au-dessus du deuxième, permettent la compression et assurent l'étanchéité aux fluides moteurs. A défaut de cette étanchéité, par exemple les gaz sous pression, nés de la combustion, auraient accès au carter du villebrequin. Dans ce cas, d'une part, l'huile lubrifiant le déplacement du piston serait chassée, et, d'autre part, la pression ainsi créée dans le carter projetterait l'huile qui y est contenue en la polluant. Quant aux segments racleurs d'un piston, ils contrôlent le débit d'huile de lubrification qui remonte vers la tête de piston, sous forme d'un indispensable film d'huile entre le piston et la chemise. Bien entendu, les segments d'étanchéité parachèvent le contrôle du flux ascendant d'huile assuré par les segments racleurs.

Un segment d'étanchéité remplit sa mission d'étanchéité par appui de sa face externe contre le cylindre, ou plus exactement contre le film d'huile, et par appui de ses faces inférieure et supérieure contre les faces correspondantes de la gorge du porte-segments dans laquelle il est logé. Ces appuis ne sont suffisamment fermes que si la pression et la dépression des fluides moteurs s'exercent correctement sur ces faces. Il devrait donc exister un jeu entre le segment et les faces de la gorge de réception, et notamment un jeu radial, suffisant pour que le libre accès des gaz soit et reste assuré, quelles que

2          0123754

soient les modifications intervenant en cours de fonctionnement. Or, on constate qu'il n'en est rien.

Ou bien ce jeu est trop grand, ou bien il est trop petit ou même inexistant.

Quand il est trop grand, par construction, la pression s'exerçant à l'arrière du segment n'est pas suffisante et les gaz peuvent donc passer entre le cylindre et le piston, engendrant, outre les inconvénients évoqués ci-dessus, une perte de puissance. En outre, et toujours dans ce cas, le piston peut basculer et provoquer le grippage de la jupe sur le cylindre. Par ailleurs, lors de la fin de la course descendante du piston, vers le point mort bas, le segment est plaqué dans sa gorge par sa face supérieure et l'huile refoulée, donc mise sous pression, pénètre aisément dans la gorge du fait du jeu en hauteur entre le segment et la gorge. Dès le début de la course ascendante, le segment se plaque dans la gorge par sa face inférieure et l'huile contenue dans la gorge est donc entraînée vers le haut du cylindre, vers la chambre de combustion. Ce phénomène contribue, à cause de la carbonisation de l'huile, à réduire puis à éliminer le jeu dont il a été question, comme on va maintenant le voir.

Quand ce jeu est trop petit, la pression s'exerçant sur le segment est trop grande, et l'étanchéité étant certes assurée, il se produit également une perte de puissance, non plus par baisse de pression, mais par frottement intensif.

Le jeu peut être trop petit par construction, mais c'est plus généralement au cours du fonctionnement qu'il le devient, jusqu'à même devenir inexistant.

Les déchets de la combustion, ainsi que les produits de la carbonisation du lubrifiant, et il est fait ici allusion au phénomène évoqué plus haut, s'agglomèrent en effet dans la gorge pour d'abord réduire le jeu et provoquer ensuite le blocage du segment. On parle alors de gommage du segment, particulièrement accentué dans les moteurs Diesel. En d'autres termes, les résidus goudronneux, qu'on appelle communément calamine, se déposent progressivement et de façon anarchique, dans la gorge et il peut même arriver que le segment ne puisse plus jouer son rôle, la calamine encrassant totalement la gorge pour exercer sur le segment une pression permanente. On notera que la dilatation du piston ne peut que grossir cet inconvénient.

On conçoit donc aisément que si le jeu entre le segment et le fond de la gorge du piston peut être à l'origine trop grand, il peut devenir trop petit. Il faut donc en déduire qu'à un certain moment le dépôt de calamine est tout à fait approprié pour ménager le jeu optimal. Malheureusement, cette situation ne peut être qu'éphémère.

On a déjà songé à empêcher la formation de cette calamine par un jonc torique relativement fin disposé dans l'espace annulaire entre le segment et la gorge du piston. Grâce, notamment, aux variations de la vitesse linéaire du piston entre ses deux points morts bas et haut, ce jonc se déplace verticalement dans la gorge de façon alternative et évite ainsi la formation de calamine. Mais comme on l'a vu plus haut, on n'obtient pas un résultat satisfaisant pour autant. On peut même prétendre que ce jonc engendre un inconvénient supplémentaire dans la mesure où il interdit le dépôt éphémère, mais optimal, de calamine. En d'autres termes, éliminer la calamine n'est pas suffisant.

4    0123754

La présente invention vise donc à rendre optimales les dimensions du jeu entre un segment et sa gorge.

A cet effet, la présente invention concerne un piston pour machines alternatives, comprenant au moins une gorge de segment et un segment logé dans la gorge de manière à ménager un jeu entre le segment et la gorge, caractérisé par le fait qu'il est prévu dans le jeu des moyens agencés pour se déplacer de façon alternative et créer simultanément une pression sur le segment.

Grâce aux moyens de l'invention, qui sont mobiles en déplacement alternatif, d'une part, on peut empêcher la formation de calamine et, d'autre part, on peut créer la pression optimale sur le segment pour que celui-ci remplisse convenablement sa fonction. En d'autres termes, on peut créer de façon permanente l'équivalent de la quantité optimale de calamine qu'on obtiendrait sans l'invention mais de façon éphémère.

Aux avantages correspondant à l'élimination des inconvénients évoqués ci-dessus, s'ajoutent une économie de carburant et une économie de lubrifiant, celle-ci étant particulièrement notable dans les moteurs Diesel.

Dans une forme de réalisation préférée de l'invention, les moyens de création de la pression comprennent au moins un "plat" annulaire vertical, de section droite rectangulaire et de hauteur différente de celle du segment, et de préférence plus petite, c'est-à-dire une portion d'un élément tubulaire, fendu par un jeu de dilatation, avec ses deux faces verticales cylindriques respectivement tournées vers la face interne verticale du segment et le fond vertical de la gorge. Le plat étant disposé dans le jeu entre segment et piston et baignant donc ainsi dans l'huile de lubrification, son déplacement alternatif par rapport au segment et au fond de la gorge, crée de part et d'autre de ses faces verticales deux coussins relativement rigides d'huile de lubrification qui vont exercer en permanence sur la face interne verticale du segment la pression recherchée.

La pression optimale peut être obtenue avec un ou plusieurs plats de l'invention disposés concentriquement, la détermination du nombre de plats à utiliser constituant le réglage auquel la présente invention ne permet pas forcément d'échapper.

Toutefois, au cas où il est nécessaire d'utiliser par exemple deux plats de l'invention, il faut que leurs hauteurs, ou leurs épaisseurs, soient différentes pour pouvoir être entraînés en déplacement l'un par rapport à l'autre et créer entre leurs faces verticales en regard le coussin d'huile nécessaire.

L'invention sera mieux comprise à l'aide de la description suivante de plusieurs formes de réalisation préférées du piston de l'invention, en référence aux dessins annexés, sur lesquels :

- la figure 1 représente une vue de dessus d'un plat de l'invention;

- la figure 2 représente une vue latérale du plat de la figure 1;

- la figure 3 représente une vue en coupe axiale du plat de la figure 1, selon la ligne III-III de la figure 1;

- la figure 4 représente une vue en coupe axiale schématique d'une première forme de réalisation du piston de
l'invention;

- la figure 5 représente une vue en coupe axiale schématique d'une deuxième forme de réalisation du piston
de l'invention, et,

- la figure 6 représente une vue en coupe axiale schématique d'une troisième forme de réalisation du piston
de l'invention, avec chambre de décompression.

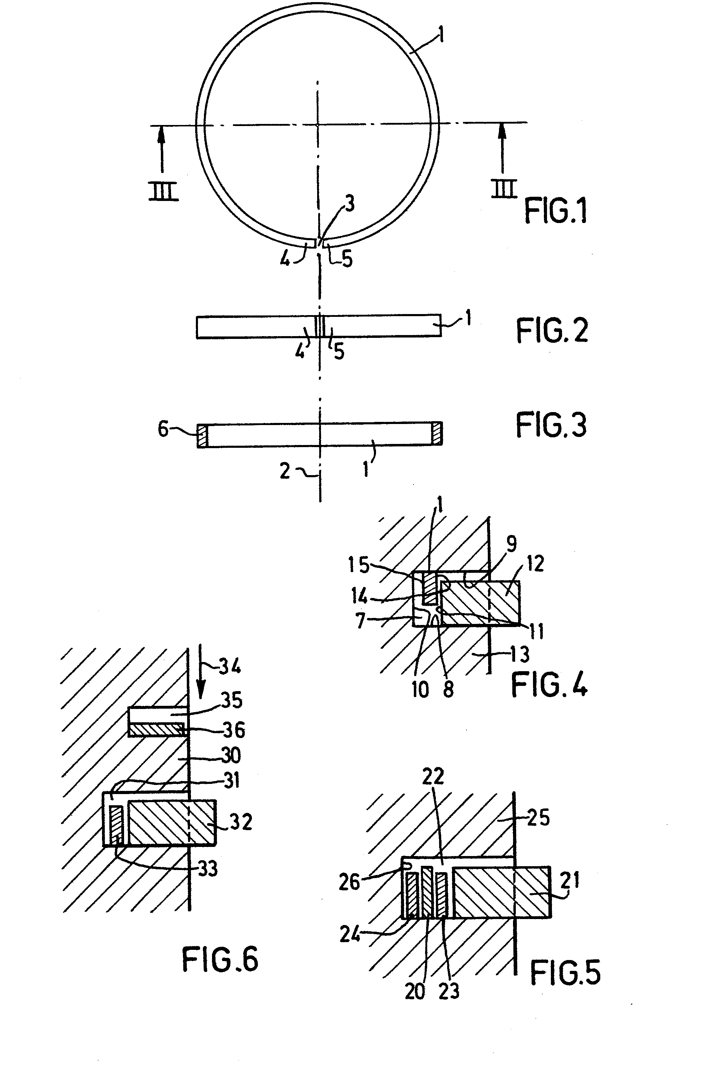

Les figs. 1 à 3 représentent un plat annulaire 1, d'axe 2,
destiné à être disposé, avec son axe 2 vertical, dans
une gorge de segment d'un porte-segments de piston de
machine alternative. Il s'agit en fait d'une portion d'élément tubulaire coupé par deux plans perpendiculaires
à l'axe 2. Le plat n'est pas complètement refermé sur
lui-même autour de l'axe 2. Il est fendu et ménage entre
ses extrémités 4 et 5 un jeu de dilatation 3. La section
droite du plat 1, dans un plan de coupe axiale, est un
rectangle dont le grand côté est parallèle à l'axe 2.

Le plat 1 est disposé dans la chambre 7 formée par les
deux faces inférieure 8 et supérieure 9 et le fond 10
de la gorge de segment ainsi que par la face interne 11
du segment 12 reçu dans la gorge, constituant un jeu
nécessaire et approprié entre le segment et la gorge. La
hauteur du plat 1, correspondant au grand côté de sa
section droite, est inférieure à la hauteur du segment 12.
Ainsi, lors du déplacement alternatif du piston 13 entre
ses points morts bas et haut, le segment 12 et le plat 1
se déplacent, indépendamment l'un de l'autre, dans la
gorge également de manière alternative, notamment à cause
des variations de vitesse, entre deux positions dans
lesquelles la face supérieure du segment 12 est en appui contre la face supérieure 9 de la gorge et la face inférieure du plat 1 est en appui contre la face inférieure 8 de la gorge, au point mort bas du piston, et la face inférieure du segment 12 est en appui contre la face inférieure 8 de la gorge et la face supérieure du plat 1 est en appui contre la face supérieure 9 de la gorge, au point mort haut du piston (fig. 4). Il en résulte un phénomène de glissement relatif entre la face externe 14 du plat 1 et la face interne 11 du segment 12, ainsi que bien entendu entre la face interne 15 du plat 1 et le fond 10 de la gorge.

On notera que le plat 1, au point mort bas, s'oppose à la pression du lubrifiant s'exerçant en direction de la chambre 7 et que, au point mort haut, il s'oppose à celle des fluides moteurs s'exerçant vers cette même chambre.

Enfin, on notera que les faces interne 15 et externe 14 du plat 1, la face interne 11 du segment 12 et le fond 10 de la gorge sont parallèles entre eux et à la direction de déplacement alternatif du segment 12 et du plat 1 dans la gorge et, par conséquent, à la direction de glissement relatif des pièces entre elles.

En fonctionnement, le plat 1 baigne dans l'huile de lubrification.

Grâce au déplacement alternatif du plat 1 dans la chambre 7, les déchets de la combustion et les produits de la carbonisation du lubrifiant ne peuvent pas se déposer dans la chambre.

Concomitamment, le glissement relatif entre le plat 1 et le segment 12, dans ce bain d'huile qu'ils traversent, engendre un coussin d'huile relativement rigide d'une

0123754

part entre le fond de la gorge et le plat et, d'autre part, entre le plat et le segment, coussins qui exercent en permanence sur la face interne 11 du segment 12 la pression nécessaire pour qu'il assure sa fonction d'étanchéité.

On notera que la profondeur radiale de gorge tient compte des largeurs du segment, du plat et du jeu de dilatation. C'est dans ce dernier que se développent les coussins dont l'épaisseur radiale est variable.

Ainsi, le plat décrit ci-dessus permet, par rapport aux pistons classiques,

- une meilleure compression,
- une meilleure étanchéité,
- un meilleur rendement, indépendant de la puissance à transmettre,
- une meilleure tenue de la jupe du piston et du cylindre et éventuellement une réduction de la surface de frottement, grâce à la limitation substantielle du basculement du piston,
- une économie de carburant, et,
- une économie de lubrifiant.

Si le plat décrit ci-dessus est parfaitement bien adapté pour le segment dit coup de feu, il n'en est pas moins utile pour les autres segments, qu'il s'agisse de segments d'étanchéité ou de segments racleurs, et dans ce cas il sera perforé.

A titre d'exemple, on peut utiliser comme plat d'élimination de la calamine, un plat en acier, de quelques centaines de $\mu$m de largeur radiale (petit côté de la section droite rectangulaire), et de hauteur (grand côté de sa section droite rectangulaire) approximativement égale
à 80 ou 90 % de la hauteur du segment associé. Le dimensionnement de la gorge de segment, du segment et du plat
sera de préférence tel qu'on laisse, à froid, un jeu
radial de quelques centaines de $\mu$m pour le développement des coussins de fluide, avantageusement d'une épaisseur radiale de quelques dizaines de $\mu$m.

On a déjà souligné plus haut qu'il pouvait être nécessaire d'utiliser plusieurs plats de l'invention disposés
concentriquement entre le segment et le fond de la gorge.
Plusieurs phénomènes peuvent présider à un tel "réglage".

Il peut s'agir, tout d'abord, d'un impératif de construction qui conduit à ménager un espace assez large entre
le segment et le fond de sa gorge. Dans ce cas, il faut
pallier les relativement grandes variations de dilatation
du piston dans son cylindre par la présence de plusieurs
plats.

Il peut également s'agir de pallier les défauts d'usinage,
comme les irrégularités dans l'épaisseur radiale du segment ou le fait que le fond de la gorge et la périphérie
des cordons qui l'entourent ne sont pas tout à fait concentriques.

Et il peut encore s'agir de vouloir pallier les variations
de température qui modifient la largeur radiale des coussins de mise en pression.

Dans tous les cas, on dispose plusieurs plats concentriques, comme illustré sur la figure 5. Afin de ne pas anéantir le bénéfice de la présence de plusieurs plats, il est
nécessaire qu'il soit créé, entre deux plats adjacents,
un coussin d'huile, c'est-à-dire qu'un glissement relatif se produise entre eux lors de la course du piston. A cet effet, les plats devront avoir respectivement des hauteurs différentes, ou des largeurs radiales différentes, ou des masses différentes, ou encore l'un d'eux pourra avoir ses arêtes émoussées. On adoptera de préférence des hauteurs différentes, quelques dizaines de $\mu$m pouvant parfaitement suffire. Dans l'exemple représenté sur la figure 5, un plat 20, de hauteur sensiblement égale à celle du segment associé 21, logé dans une gorge 22, est disposé entre deux autres plats 23, 24, d'une hauteur sensiblement inférieure à celle du plat 20. Ainsi, lors de la course du piston 25, il se créera des coussins de fluide entre les plats adjacents 24 et 20 et entre les plats 20 et 23 comme entre le fond 26 de la gorge et le plat 24, et le plat 23 et le segment 21.

Par ailleurs, des stries circonférentielles peuvent être avantageusement formées sur les faces verticales des plats, sur l'une de leurs faces ou les deux, ainsi que sur le fond de la gorge ou la face verticale intérieure du segment. Elles sont destinées à s'aplatir sous certaines pressions ou à s'émousser par érosion. Elles contribuent, ainsi, à pallier les défauts de tolérance évoqués plus haut. Et, par ailleurs, elles favorisent la détermination du jeu radial optimal à l'arrière du segment. Elles exercent finalement une autre fonction indirecte, en liaison avec la dynamique des plats. En effet, si par manque de jeu, les plats s'immobilisent un instant dans leurs course verticale, la pression alors exercée sur eux peut facilement détruire les crêtes des stries, la résistance de ces crêtes étant bien inférieure à la poussée due, par exemple, à l'impulsion de basculement ou à la dilatation du piston. L'applatissement des stries remet alors immédiatement les plats en mouvement.

11

0123754

Enfin, il peut être avantageux de prévoir dans la partie supérieure du cordon dans lequel est ménagée la gorge de segment, en amont de cette gorge sur le trajet des fluides moteurs, au moins une chambre de décompression, connue en soi, permettant de moduler la pression s'exerçant sur le segment considéré. On conçoit facilement que dans le cadre de l'invention, où le jeu entre le segment et le fond de sa gorge est optimalisé par un ou plusieurs plats verticaux, il est intéressant de moduler la pression des fluides moteurs se dirigeant vers le segment coup de feu. Ces fluides restent bien sûr nécessaires, mais il est inutile qu'ils soient en surpression, comme dans les pistons classiques.

Une telle forme de réalisation du piston de l'invention est représentée sur la figure 6.

Le piston comporte une gorge 31, ménagée dans le cordon 30, et recevant par exemple le segment coup de feu 32, avec interposition d'un plat vertical 33.

En amont de la gorge 31, sur le trajet 34 des fluides moteurs, est ménagée une gorge ou chambre de décompression 35. Dans cette chambre est logé un plat horizontal 36, c'est-à-dire dont la section droite est rectangulaire, mais avec le grand côté du rectangle horizontal, et non plus vertical, et s'étendant sur pratiquement toute la profondeur de la chambre 35. Le plat 36 sert à empêcher le dépôt de calamine dans la chambre 35, par son déplacement alternatif vertical dû principalement aux variations de vitesse linéaire du piston. Cette chambre 35, qui agit comme un modulateur, décomprime les fluides moteurs avant qu'ils n'atteignent le segment coup de feu 32.

Revendications

1. Piston pour machines alternatives comprenant au moins une gorge de segment (7; 22; 31) et un segment (12; 21; 32) logé dans la gorge de manière à ménager un jeu entre le segment et la gorge, caractérisé par le fait qu'il est prévu dans le jeu des moyens (1; 24, 20, 23; 33) agencés pour se déplacer de façon alternative et créer simultanément une pression sur le segment.

2. Piston selon la revendication 1, dans lequel les dits moyens de création de la pression comprennent au moins un plat annulaire (1) d'axe vertical (2), à section droite rectangulaire, dont le grand côté a une hauteur différente de celle du segment.

3. Piston selon la revendication 2, dans lequel la hauteur du plat est inférieure à celle du segment.

4. Piston selon l'une des revendications 2 et 3, dans lequel le plat possède au moins sur l'une de ses faces verticales des stries circonférentielles.

5. Piston selon l'une des revendications 2 à 4, dans lequel le plat est fendu et ménage un jeu de dilatation (3).

6. Piston selon l'une des revendications 2 à 5, dans lequel il est prévu plusieurs plats annulaires (24, 20, 23), d'axe vertical, à section droite rectangulaire, et concentriques.

7. Piston selon la revendication 6, dans lequel les hauteurs respectives de deux plats adjacents sont différentes.

8. Piston selon l'une des revendications 6 et 7, dans lequel les arêtes d'au moins l'un des plats sont émoussées.

9. Piston selon l'une des revendications 1 à 8, dans lequel il est ménagée, en amont de la gorge (31) de segment sur le trajet des fluides moteurs, au moins une chambre de décompression (35).

10. Piston selon l'une des revendications 1 à 9, dans lequel il est ménagé plusieurs gorges de segment, dans au moins l'une desquelles est disposé un plat de création de pression.

1/1

0123754

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-1 790 767  (RICARDO)<br><br>* Page 1, ligne 38 - page 3, ligne 7; figures 1,2 *<br><br>--- | 1-3,5,10 | F 16 J    9/00 |
| X | FR-A-2 427 479  (PROMEYRAT)<br>* Page 3, ligne 32 - page 4, ligne 39; figures 1-3 *<br><br>--- | 1,9 | |
| A | FR-A-1 564 583  (PROMEYRAT)<br>* En entier *<br><br>--- | 1 | |
| E | FR-A-2 515 767  (L'EVOLUTIVE)<br>* En entier *<br><br>----- | 1-10 | |

DOMAINES TECHNIQUES
RECHERCHES (Int. Cl. 3)

F 16 J

Le présent rapport de recherche a été établi pour toutes les revendications

| Lieu de la recherche<br>LA HAYE | Date d'achèvement de la recherche<br>23-12-1983 | Examinateur<br>LEGER M.G.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82